# EUROPEAN PATENT APPLICATION

(11) **EP 2 036 756 A1**
(43) Date of publication of application: **18.03.2009**
(21) Application number: 07116068.3
(22) Date of filing: 11.09.2007
(51) Int. Cl.: B60K 15/035, F16K 17/40

(54) **Apparatus, System & Method**

(71) Applicant: Delphi Technologies, Inc., Troy, MI 48007 (US)
(72) Inventor: Ortynecki, Wojciech, 30-251, Krakow (PL); Puchala, Grzegorz, 30-318, Krakow (PL); Jasinski, Jan, 31-548, Krakow (PL)
(74) Representative: Jones, Keith William

(57) **Abstract**

A fluid delivery system is provided having closure means for sealing an aperture (12) in a system body (10), wherein the closure means comprises a closure member (14) integral with the body (10) and opening means (20) to facilitate compromising the integrity of the closure member (14), thereby to open the aperture (12). A method of manufacturing and testing such a fluid delivery system is also provided. Advantageously, the closure means is integral with the system body (10) thereby eliminating the need for a separate additional component to close the aperture (12) and seal the fluid delivery system when required, e.g. for leak testing.

## Description

The present invention relates to leak testing of fluid delivery systems such as fuel systems and particularly to pressure testing of automotive fuel delivery systems.

Systems which deliver a liquid or gas from a source are typically required to be leak-free during use. Such a system is an automotive fuel delivery system and, for safety and performance reasons known in the art, it is particularly important for the system to be leak-free.

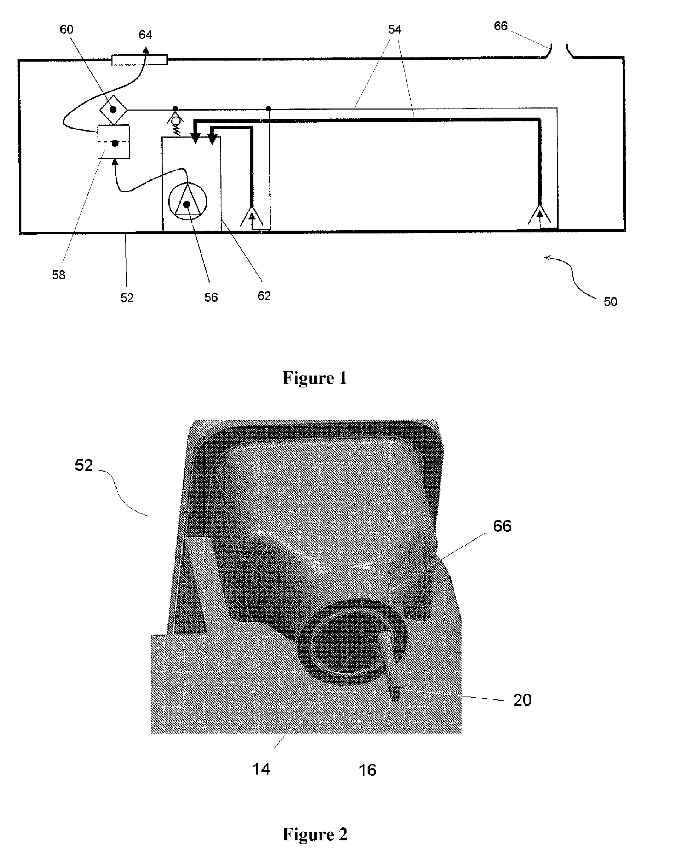

A typical automotive fuel delivery system (50) is shown in Figure 1. The fuel delivery system (50) supplies fuel to an engine demand (64). The fuel delivery system (50) comprises one or more bodies such as a fuel tank (52), a fuel pump (56), fuel filter (58), pressure regulator valve (60) and fuel lines (54). One or more of the fuel pump (56), filter (58) and regulator (60) may be located outside the fuel tank (52). Typically, a fuel module (62), housing at least the fuel pump (56), is often located in the fuel tank (52). The fuel filter (58) and pressure regulator valve (60) may also be housed in the fuel module (62) or located separately inside the fuel tank (52).

It is known for leak tests to be performed on automotive fuel delivery systems (50) at various stages of the system or automotive build. The fuel delivery system (50), or a body of the system, e.g. the fuel tank (52), may be leak tested by the fuel system manufacturer to withstand a required pressure. The fuel delivery system (50) may also be leak tested by the vehicle manufacturer on the production line when the fuel system is assembled.

A typical leak test may be conducted underwater, the system being pressurised and a possible leak being detected visually, e.g. air bubbles.

One or more of the abovementioned bodies (52, 56, 58, 60) typically include at least one aperture (66), e.g. an air inlet. In order to perform the leak test, the one or more apertures (66) must be individually closed and sealed to adequately seal the fuel delivery system (50) before pressure testing commences. A typical pressure at which a fuel delivery system is tested and must withstand is 35kPa.

Sealing one or more apertures (66) can be achieved by inserting a component or closure means, such as a plug, bung or cap, in or over the aperture (66).

However, a number of disadvantages are associated with such closure means. An additional separate component is required adding to the cost of the system and test procedure. The additional component requires transportation with the system and may easily become lost from the system during transportation, storage or assembly. Before the closure means is located in or over an aperture, i.e. before testing, dirt may enter the fuel system and have an adverse effect on performance when in use. Such dirt may also affect the seal between the closure means and the aperture wall which may subsequently affect the results of a leak test. A test person is required to locate the aperture and manually locate the closure means adding time to the test procedure. There is also a risk of the closure means being knocked away from the aperture or being expelled from the aperture during testing.

Closure means to close an aperture in a body of a fluid delivery system to seal the system, such as a fuel delivery system, for leak testing is required. Such means may include one or more of the following features:
- simple, quick and easy to operate;
- inexpensive and simple to manufacture;
- adequate to withstand leak test requirements and conditions, e.g. pressure; and
- resistant to knocks, puncturing, corrosion etc. prior to testing.

The invention provides a fluid delivery system having closure means for sealing an aperture in a system body, wherein the closure means comprises a closure member integral with the body and opening means adapted to facilitate compromising the integrity of the closure member thereby to open the aperture.

The closure means being integral with the body eliminates the need for an additional separate component, e.g. a plug or cap, to close and seal the aperture in the body before a leak test is performed on the system. Advantageously, the closure means may be formed in or over the aperture of the body, e.g. a fuel tank, at the point of manufacture thereof, avoiding the need for a separate component to be fitted at a later stage to close and seal the aperture.

Preferably, the closure member is a sheet-like member.

When required, the aperture is opened by compromising the integrity of the closure member. This may be carried out by simply puncturing the closure member. Alternatively, if the application requires the closure member to be substantially removed, either in part or in whole, from the aperture, the opening means may suitably facilitate removal of the closure member from the aperture. The opening means may comprise a point, line or portion of weakness in the closure member, e.g. a frangible portion. The frangible portion may aid the facilitation for compromising the integrity of the closure member.

Preferably, the frangible portion is disposed between the closure member and part of the aperture.

Preferably, the frangible portion is disposed near the aperture wall.

Suitably, the aperture may be substantially circular and the frangible portion may surround the closure member.

The frangible portion may comprise one frangible portion extending 360 degrees around the closure member or alternatively may comprise a plurality of equally spaced frangible portions disposed around the closure member.

Suitably, the aperture wall may comprise a circumferential protrusion extending inwardly from the aperture wall and the frangible portion may be disposed between the circumferential protrusion and the closure member.

The frangible portion may comprise a substantially thin section relative to the closure member and circumferential protrusion. Preferably, the closure member and circumferential protrusion are substantially similar in thickness. Advantageously, a thin section provides a notch effect in the frangible portion and a weak point between the closure member and the aperture wall. This allows a portion of the closure member to be easily punctured or a portion, or all, of the closure member to be removed from the aperture when required.

Preferably, the frangible portion has a thickness adequate to withstand typical test conditions, e.g. pressures of around 35 kPa. The thickness of the frangible portion must also be adequate to withstand typical conditions during transit of the system, e.g. knocks or dirt/grease, and also similar storage conditions. An adequate thickness of the frangible portion has been found to be from 0.1 mm to 0.5mm. Preferably, the thickness is 0.2mm.

Suitably, the closure member may comprise removal means to aid the removal of the closure member from the aperture. Such removal means may comprise a handle, lever or ring-pull attached to the closure member. Other suitable removal means may be used. The removal means may further comprise means to fold a handle or lever substantially flat relative to the closure member to provide discrete removal means during transit or storage. The handle or lever may be unfolded when required. A ring-pull advantageously provides the substantially flat feature.

Once removed, the closure member may simply be discarded. However, removal means may not be necessary and the closure member may be punched out from the aperture of the body.

Preferably, the closure means is a plastics material and resistant to corrosion, particularly from fuel and water.

Suitably, the fluid delivery system may be a fuel delivery system. The aperture may be an air inlet.

The invention also provides a method of manufacturing a fluid delivery system, the method comprising the steps of:
- providing a system body;
- providing an aperture in the body; and
- forming closure means integral with the body to close and seal the aperture.

The method of manufacturing may further comprise the steps of pressure testing the fluid delivery system and compromising the integrity of the closure means.

The invention further provides a method of testing a fuel delivery system or body thereof. The method may be carried out during assembly of the fluid delivery system, e.g. a fuel system, or during vehicle assembly on a production line. The method of testing may comprise the steps of:
- applying a pressure to the system or body;
- detecting leaks from the system or body; and
- compromising the integrity of the closure means.

The invention further provides a method of testing may be performed underwater. Advantageously, leaks may be visibly identified by the detection of air bubbles.

An embodiment of the present invention will now be described, by way of example only, with reference to the accompanying drawings, in which:
- Figure 1 shows a schematic representation of a typical fuel delivery system including an air inlet;
- Figure 2 shows the closure member for sealing the air inlet of Figure 1;

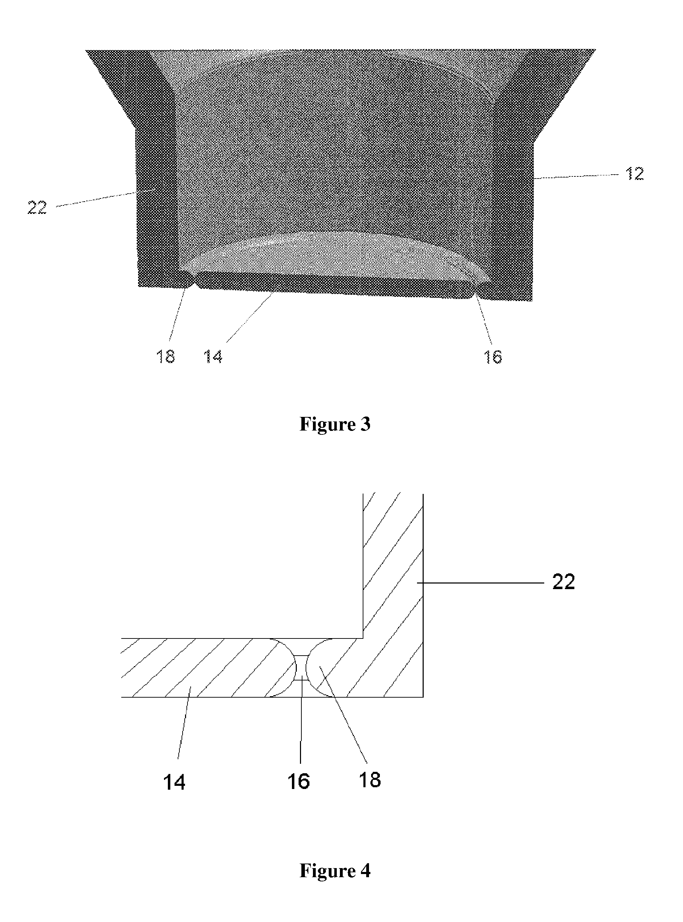

- Figure 3 shows a section through the sealed air inlet and closure member of Figure 2; and
- Figure 4 shows a section through the frangible portion of the closure member.

An automotive fuel delivery system (50), or a body of the fuel system, e.g. a fuel tank (52), may require leak testing by a manufacturer or on a production line when the vehicle is being assembled. The system is often tested underwater and subjected to a pressure to identify possible leaks, for example by detecting air bubbles. The fuel delivery system (50) must be a closed system so all apertures, including air inlets (66), must be sealed. One or more closure members (14) are used to close and seal the apertures (66) in the fuel delivery system (50), or a body thereof, e.g. fuel tank (52), before leak testing is performed.

As shown in Figure 2, a closure member (14) closes an air inlet (66) in a body (52), e.g. a fuel tank, of a fuel delivery system (50). The closure member (14) is flat and sheet-like. Advantageously, the closure member (14) is manufactured at the point of manufacture of the fuel tank (52), e.g. during an injection moulding stage, and is integral with the aperture (66). Additional separate components, e.g. a bung, cap or plug, are not required to be manually inserted into the aperture (66) at a later stage before testing commences.

During testing, the fuel delivery system (50), or body (52) thereof, is subject to a test pressure. The closure members (14) ensure the system (50), or body (52), is closed and sealed throughout the testing procedure. Any defected joints, connections or regions in the fuel delivery system (50) or body thereof will be inadequate to withstand the internal test pressure. Leaks may easily be detected by audibly identifying air leaks or conveniently the leak testing may be performed underwater and air bubbles visually identified.

After testing is complete, the aperture (66) will typically require opening before use on a vehicle. This may be done by compromising the integrity of the closure member (14) by simply puncturing the closure member (14) or alternatively, depending on requirements, the closure member (14) may be conveniently removed, e.g. peeled, from the aperture (66). To facilitate this removal, a frangible portion (16) is disposed near the aperture wall (22) to provide a circumferential line of weakness around the closure member (14). The frangible portion (16) is disposed between the closure member (14) and a circumferential protrusion (18) extending inwardly from the aperture wall (22).

To remove the closure member (14) from the aperture (66), a force is applied to break the frangible portion (16). The closure member (14) may be punched inwardly to break the frangible portion (16) and then pulled away from the aperture (12). Conveniently, a handle, lever or ring-pull (20) may be attached to the closure member (14) to provide a mechanical advantage to break the frangible portion (16) and also to provide grip to peel the closure member (14) from the aperture (66).

The closure means is resistant to knocks, shocks and corrosion, e.g. during transit and storage, before being removed at the testing stage.

The closure means is conveniently formed with the body (52) of a fluid delivery system, e.g. fuel system, at the same point of manufacture, e.g. during injection moulding. The closure member (14) is therefore integral with, and formed across, the aperture (66) so the aperture (66) is closed immediately after manufacture. This eliminates the risk of dirt entering the body during storage or transit and eliminates the need for a separate, additional component to be manufactured and fitted at a later stage to seal the system before leak testing commences. The closure member (14) is formed when the body (52) and aperture (66) are formed during the same manufacturing process so additional manufacturing costs are negligible.

## Claims

1. A fluid delivery system having closure means for sealing an aperture (12) in a system body (10), wherein the closure means comprises a closure member (14) integral with the body (10) and opening means to facilitate compromising the integrity of the closure member (14), thereby to open the aperture (12).

2. A fluid delivery system according to claim 1, wherein the closure member (14) comprises a sheet-like member.

3. A fluid delivery system according to claim 1 or 2, wherein the opening means comprises a point, line or portion of weakness in the closure member (14).

4. A fluid delivery system according to claim 3, wherein the opening means comprises at least one frangible portion (16) disposed between the closure member (14) and a part of the aperture (12).

5. A fluid delivery system according to claim 4, wherein the frangible portion (16) comprises a substantially thin section relative to the closure member (14) and a wall part of the aperture (12).

6. A fluid delivery system according to claim 5, wherein the frangible portion (16) has a thickness of from 0.1mm to 0.5mm.

7. A fluid delivery system according to any preceding claim, wherein the closure member (14) comprises removal means (20) to aid removal of the closure member (14) from the aperture (12).

8. A fluid delivery system according to any preceding claim, wherein the fluid delivery system is a fuel system.

9. A method of manufacturing a fluid delivery system according to any one of claims 1 to 8, the method of manufacture comprising the steps of:
- providing a system body (10);
- providing an aperture (12) in the body (10); and
- forming closure means integral with the body (10) to close and seal the aperture (12).

10. A method of manufacturing a fluid delivery system according to claim 9, the method further comprising the steps of:
- pressure testing the fluid delivery system; and
- compromising the integrity of the closure means.

11. A method of testing a fuel delivery system according to any one of claims 1 to 8, the method comprising the steps of:
- applying a pressure to the system or body (10);
- detecting any leaks from the system or body (10); and
- compromising the integrity of the closure means.
